# EUROPÄISCHE PATENTANMELDUNG

(11) **EP 4 852 292 A1**
(43) Veröffentlichungstag der Anmeldung: **09.12.2026**
(21) Anmeldenummer: 25180213.8
(22) Anmeldetag: 02.06.2025
(51) Int. Cl.: H02M 5/12, H02M 7/483, F27B 3/08, H02M 5/458, H02P 13/00, H02P 21/12

(54) **MULTILEVELKONVERTER MIT TRANSFORMATORFLUSS BASIERTER DIREKTER LEISTUNGSREGELUNG EINES LICHTBOGENOFENS**

(71) Anmelder: Primetals Technologies Germany GmbH, 91058 Erlangen (DE)
(72) Erfinder: Weinzierl, Klaus, 90480 Nürnberg (DE)
(74) Vertreter: Metals@Linz

(57) **Zusammenfassung**

Steuerverfahren für einen Multilevelkonverter (4), der Elektroden (1) eines Drehstrom-Lichtbogenofens (2) über einen Ofentransformator (3) mit elektrischer Energie versorgt, mit folgenden, mit einer Zykluszeit (TZ) immer wieder ausgeführten Schritten:
- eine Steuereinrichtung (15) des Multilevelkonverters (4) ermittelt für den jeweils aktuellen Zeitpunkt erste ausgangsseitige Phasenspannungsanteile (*U*11**, U*12**, U*13*)*,* so dass ein durch die ersten ausgangsseitigen Phasenspannungsanteile (*U*11**, U*12**, U*13*) bestimmter komplexer erster ausgangsseitiger Spannungsraumzeiger (*U*1*) einer in der komplexen Ebene senkrecht zu einem komplexen Flussraumzeiger (*Φ*), der aus magnetischen Schenkelflusskomponenten (*Φ*1 , *Φ*2, *Φ*3) des Ofentransformators (3) gebildet ist, orientiert ist,
- die Steuereinrichtung (15) ermittelt zweite ausgangsseitige Phasenspannungsanteile (*U*21**, U*22*, *U*23*), so dass ein durch die zweiten ausgangsseitigen Phasenspannungsanteile (*U*21**, U*22*, *U*23*) bestimmter komplexer zweiter ausgangsseitiger Spannungsraumzeiger (*U2**) in der komplexen Ebene orthogonal zu dem komplexen ersten ausgangsseitigen Spannungsraumzeiger (*U*1*) orientiert ist,
- die Steuereinrichtung (15) steuert den Multilevelkonverter (4) derart an, dass der Multilevelkonverter (4) mit den Summen der ersten und zweiten ausgangsseitigen Phasenspannungsanteile (*U*11**, U*12*, *U*13*, *U*21**, U*22*, *U*23*) korrespondierende ausgangsseitige Phasenspannungen bereitstellt.

## Beschreibung

### Gebiet der Technik

Die Erfindung betrifft ein Steuerverfahren für einen Multilevelkonverter, der Elektroden eines Drehstrom-Lichtbogenofens über einen Ofentransformator mit elektrischer Energie versorgt. Daneben betrifft die Erfindung ein Steuerprogramm und eine Steuereinrichtung zur Umsetzung eines solchen Steuerverfahrens sowie einen Multilevelkonverter.

### Stand der Technik

In einem Elektrostahlwerk wird Schrott mittels eines Lichtbogenofens geschmolzen. Dazu werden in der Regel drei Elektroden in einen mit Schrott gefüllten Behälter getaucht und sodann zwischen dem Schrott und den Elektroden Lichtbögen generiert, so dass der Schrott aufgeheizt und geschmolzen wird. Die an die Elektroden angelegten Spannungen liegen typischerweise im Bereich von mehreren 100 V bis etwas über 1 kV, manchmal bis zu 2 kV. Die Leistung eines industriellen Lichtbogenofens liegt oftmals zwischen 50 MW und 300 MW.

Durch den ständig flackernden Lichtbogen kommt es zu Spannungsschwankungen und - wenn keine Gegenmaßnahmen ergriffen werden - zu erheblichen Netzrückwirkungen. Historisch ist es bekannt, dem Lichtbogenofen Kompensatoren parallel zu schalten, beispielsweise einen sogenannten SVC (static VAR compensator) oder einen sogenannten STATCOM (static compensator) oder passive Filter. Derartige Kompensatoren sind groß, schwer und teuer. Weiterhin erzeugen sie Verlustleistung und beeinflussen auch andere an das Versorgungsnetz angeschlossene Einheiten.

Aus der gattungsgemäßen EP 2 329 684 B1 ist bekannt, den Lichtbogenofen über einen Multilevelkonverter zu speisen, der eingangsseitig des Ofentransformators angeordnet ist. Mit einem derartigen Umrichter ist es möglich, zusätzlich zu einer genauen Einstellung der Blindleistung auf der Eingangsseite auch die vom Elektrolichtbogenofen aufgenommene Wirkleistung zu regeln. In der genannten EP-Schrift ist ausgeführt, dass über die symmetrische Belastung der Phasen des Versorgungsnetzes mit Wirkleistung hinausgehende Rückwirkungen der Phasen des Lichtbogenofens auf das Versorgungsnetz minimiert werden. Die genaue Art und Weise der Ansteuerung des Multilevelkonverters ist der genannten EP-Schrift nicht zu entnehmen.

Aus der EP 2 947 766 A1 ist eine Stromversorgungseinrichtung für eine nichtlineare Last bekannt. Die Last kann ein Lichtbogenofen sein. Die Stromversorgungseinrichtung ist als Multilevel-Matrixumrichter ausgebildet. Sekundärseitig anstehenden Spannungen und Ströme können erfasst werden und bei der Ermittlung von Stromsollwerten und/oder Spannungssollwerten für die Umrichtereinheiten der Stromversorgungseinrichtung berücksichtigt werden.

In der nachveröffentlichten europäischen Patentanmeldung EP 23218588.4 wurde zur Konkretisierung der Vorgehensweise in EP 2 329 684 B1 vorgeschlagen, wenn einer Steuereinrichtung des Multilevelkonverters mit einer Zykluszeit immer wieder ausgangsseitig des Multilevelkonverters fließende ausgangsseitige Phasenströme bekannt werden, zusätzlich hierzu mit der Zykluszeit immer wieder folgende Schritte durchzuführen:
- die Steuereinrichtung ermittelt für den jeweils aktuellen Zeitpunkt erste ausgangsseitige Phasenspannungsanteile, so dass eine durch die ersten ausgangsseitigen Phasenspannungsanteile bestimmte komplexe erste ausgangsseitige Spannung in der komplexen Ebene parallel zu einem durch die ausgangsseitigen Phasenströme bestimmten komplexen ausgangsseitigen Strom orientiert ist,
- die Steuereinrichtung ermittelt zweite ausgangsseitige Phasenspannungsanteile, so dass eine durch die zweiten ausgangsseitigen Phasenspannungsanteile bestimmte komplexe zweite ausgangsseitige Spannung in der komplexen Ebene orthogonal zu der komplexen ersten ausgangsseitigen Spannung orientiert ist,
- die Steuereinrichtung steuert den Multilevelkonverter derart an, dass der Multilevelkonverter mit den Summen der ersten und zweiten ausgangsseitigen Phasenspannungsanteile korrespondierende ausgangsseitige Phasenspannungen bereitstellt. Es wird also vorgeschlagen, die ausgangsseitigen Phasenspannungen so zu ermitteln, dass die komplexe erste und die komplexe zweite ausgangsseitige Spannung parallel bzw. orthogonal zu dem komplexen ausgangsseitigen Strom orientiert sind, wie er durch die der Steuereinrichtung bekannten ausgangsseitigen Phasenströme bestimmt ist. Dabei sind die in der EP 23218588.4 genannten komplexen Größen Spannung, Strom und Fluss jeweils komplexe Raumzeiger.

Der Vorteil dieser Vorgehensweise ist, dass die vom Umrichter an den Ofentransformator abgegebene Momentanleistung allein durch den ersten Anteil in Richtung des Stroms bestimmt ist. Der zweite Anteil ist frei wählbar, da er die Momentanleistung nicht beeinflusst. Während der erste Anteil insbesondere derart gewählt werden kann, dass eine der Steuereinrichtung bekannte Sollleistung für den aktuellen Zeitpunkt erhalten wird, wurde bezüglich des zweiten Anteils insbesondere vorgeschlagen, diesen so zu wählen, dass der magnetische Fluss des Ofentransformators im Inneren eines Flussgebietes gehalten werden kann, das auch in eine geschlossene Kurve entarten kann.

Problematisch bei dieser bekannten Vorgehensweise ist es jedoch, dass das Steuerverfahren nicht angewendet werden kann, wenn kein Strom fließt, mithin keine zu einem Raumzeiger des Stroms parallele und senkrechte Komponente definiert werden kann. Anders gesagt hat das Steuerverfahren an dieser Stelle eine Singularität, sodass es auch für kleine Ströme nahe Null zu Schwierigkeiten kommen kann. Somit kann das bekannte Steuerverfahren insbesondere dann nicht angewendet werden, wenn der Ofentransformator bereits angeschlossen ist, die Lichtbögen des Drehstrom-Lichtbogenofens jedoch noch nicht gezündet haben. Beispielsweise kann dann, wenn der magnetische Fluss innerhalb des Flussgebiets liegt, nachdem die Spannung als zeitliche Ableitung des Flusses verschwindet, ein Zünden von Lichtbögen unmöglich sein. Auch treten immer dann Probleme auf, wenn ein oder mehrere Lichtbögen, beispielsweise bei Sättigung aufgrund der Strombegrenzung des Ofentransformators, abreißen und somit ebenso der Strom verschwindet.

### Zusammenfassung der Erfindung

Der Erfindung liegt daher die Aufgabe zugrunde, eine demgegenüber verbesserte, insbesondere auch bei Wegfall von Strom verlässlich und robust anwendbare, Möglichkeit zur Steuerung eines Multilevelkonverters für einen Lichtbogenofen anzugeben.

Zur Lösung dieser Aufgabe sind erfindungsgemäß ein Steuerverfahren, ein Steuerprogramm, eine Steuereinrichtung und ein Multilevelkonverter mit den Merkmalen der nebengeordneten Ansprüche vorgesehen. Vorteilhafte Weiterbildungen ergeben sich aus den Unteransprüchen.

Bei einem Steuerverfahren für einen Multilevelkonverter, der Elektroden eines Drehstrom-Lichtbogenofens über einen Ofentransformator mit elektrischer Energie versorgt, sind erfindungsgemäß folgende, mit einer Zykluszeit immer wieder ausgeführte Schritte vorgesehen:
- eine Steuereinrichtung des Multilevelkonverters ermittelt für den jeweils aktuellen Zeitpunkt erste ausgangsseitige Phasenspannungsanteile, so dass ein durch die ersten ausgangsseitigen Phasenspannungsanteile bestimmter komplexer erster ausgangsseitiger Spannungsraumzeiger in der komplexen Ebene senkrecht zu einem komplexen Flussraumzeiger, der aus magnetischen Schenkelflusskomponenten des Ofentransformators gebildet ist, orientiert ist,
- die Steuereinrichtung ermittelt zweite ausgangsseitige Phasenspannungsanteile, so dass ein durch die zweiten ausgangsseitigen Phasenspannungsanteile bestimmter komplexer zweiter ausgangsseitiger Spannungsraumzeiger einer in der komplexen Ebene orthogonal zu dem komplexen ersten ausgangsseitigen Spannungsraumzeiger orientiert ist,
- die Steuereinrichtung steuert den Multilevelkonverter derart an, dass der Multilevelkonverter mit den Summen der ersten und zweiten ausgangsseitigen Phasenspannungsanteile korrespondierende ausgangsseitige Phasenspannungen bereitstellt.

Die Ansteuerung des Multilevelkonverters, so dass er ausgangsseitig vorgegebene Phasenspannungen bereitstellt, ist als solche ohne weiteres möglich. Die Möglichkeiten zur entsprechenden Ansteuerung sind der Fachperson bekannt. Entscheidend ist vorliegend die Ermittlung der ausgangsseitigen Phasenspannungen, so dass der komplexe erste und der komplexe zweite ausgangsseitige Spannungsraumzeiger orthogonal bzw. parallel zu dem komplexen magnetischen Flussraumzeiger des Ofentransformators orientiert sind, wie er durch die der Steuereinrichtung bekannten Zustandsgrößen bestimmt ist. Dabei sei angemerkt, dass eine explizite Ermittlung der ersten und zweiten Phasenspannungsanteile nicht in jeder Ausgestaltung nötig ist, sondern eine Ermittlung der Spannungsraumzeiger ausreichen kann, da diese eine andere Darstellung der durch sie festgelegten Phasenspannungsanteile sind, diese mithin ebenso ermittelt sind.

Insbesondere kann hierbei vorgesehen sein, dass der Steuereinrichtung ausgangsseitig des Multilevelkonverters fließende ausgangsseitige Phasenströme bekannt werden. Diese Phasenströme können bei der Ermittlung der ersten ausgangsseitigen Phasenspannungsanteile und/oder der zweiten ausgangsseitigen Phasenspannungsanteile berücksichtigt bzw. verwendet werden, worauf im Folgenden noch genauer eingegangen wird.

Es ist möglich, dass die Steuereinrichtung die ausgangsseitigen Phasenströme als Messwerte entgegennimmt. Alternativ ist es möglich, dass die Steuereinrichtung die ausgangsseitigen Phasenströme mittels eines Modells des Lichtbogenofens ermittelt. Entsprechende Modelle sind Fachleuten bekannt. Auch im Falle einer modellgestützten Ermittlung der ausgangsseitigen Phasenströme ist es möglich, dass die Steuereinrichtung (zusätzlich) Messwerte für die ausgangsseitigen Phasenströme entgegennimmt. Im Rahmen der Ermittlung der ersten und gegebenenfalls auch der zweiten ausgangsseitigen Phasenspannungsanteile werden auch in diesem Fall die modellgestützt ermittelten ausgangsseitigen Phasenströme verwendet. Es ist jedoch möglich, dass die Steuereinrichtung das Modell des Lichtbogenofens anhand der Abweichung der mittels des Modells des Lichtbogenofens ermittelten ausgangsseitigen Phasenströme von den Messwerten adaptiert.

Im Unterschied zum Ansatz der eingangs genannten, nachveröffentlichten europäischen Patentanmeldung EP 23218588.4 wird vorgeschlagen, als Koordinatensystem zur Ermittlung der ersten und der zweiten ausgangsseitigen Phasenspannungsanteile nicht die ausgangsseitigen Phasenströme zu verwenden, sondern es wird vorgeschlagen, sich an den magnetischen Flüssen, insbesondere dem entsprechenden komplexen Flussraumzeiger, zu orientieren. Dem liegt der Gedanke zugrunde, dass zum einen der komplexe Flussraumzeiger zumindest im Wesentlichen senkrecht auf dem komplexen Raumzeiger der ausgangsseitigen Phasenströme steht, mithin der aus den ersten ausgangsseitigen Phasenspannungsanteilen gebildete Spannungsraumzeiger senkrecht hierzu zumindest näherungsweise in Richtung des Stromraumzeigers liegt und somit zu einer momentanen Wirkleistung beiträgt. Im Gegensatz zum Stromraumzeiger allerdings liegt ein von Null verschiedener komplexer magnetischer Flussraumzeiger in dem Ofentransformator auch dann vor, wenn kein Stromfluss vorhanden ist, also insbesondere auch im Leerlauf des Transformators. Die Singularität um *I*=0 wird vermieden und gleichzeitig dennoch eine Möglichkeit eröffnet, zum einen über die ersten Phasenspannungsanteile auf eine momentane Sollleistung zu regeln, zum anderen die übrigen Freiheitsgrade zu nutzen, um weiteren Regelungszielen nachzugehen, insbesondere einer Flussregelung bzw. einer Vermeidung von zu starken Rückkopplungen in das Stromnetz (sogenannter "Flicker").

Das beschriebene Vorgehen ist vorteilhafterweise nahe an einem in einem gänzlich anderen Bereich bewährten Verfahren, da Ähnlichkeiten zur feldorientierten Regelung von Synchronmaschinen vorliegen. Bei dieser wird der Flussraumzeiger der Synchronmaschine erfasst und der Stromraumzeiger in eine Komponente senkrecht und eine Komponente parallel zum Flussraumzeiger aufgeteilt.

Die Vorgehensweise lässt sich, wie dargelegt, problemlos auch im sekundärseitigen Leerlauf des Ofentransformators einsetzen, da die magnetischen Schenkelflusskomponenten als nur wenig von den Transformatorströmen abhängig angenommen werden können und der Transformator auch im Leerlauf magnetisiert ist. So entfällt insbesondere eine umständliche Prozedur beim Zünden der Elektroden des Lichtbogenofens.

Das Steuerverfahren ist ferner betriebssicher, da es außer bei einem komplexen magnetischen Flussraumzeiger von Null keine Singularität aufweist. Die Singularität lässt sich einfach umgehen, da eine beliebige Spannung zu einem von Null verschiedenen Flussraumzeiger führt. Diese beliebige Spannung kann beim Start des Steuerverfahrens bzw. einer Betriebsphase auf den leerlaufenden Transformator gegeben werden, beispielsweise, während die Elektroden des Lichtbogenofens in den zu schmelzenden Schrott bzw. allgemein das zu schmelzende Metall abgesenkt werden. Wie noch genauer dargelegt werden wird, kann diese Startphase genutzt werden, um die anfänglichen Schenkelflüsse zu identifizieren, nachdem der Transformator in die Sättigung geht, mithin die Sättigungsmagnetisierung festgestellt werden kann. All dies ist im Leerlauf des Transformators möglich und wird im Leerlauf abgeschlossen. Ein Zünden des Lichtbogens, um einen von Null verschiedenen Stromraumzeiger zu erreichen, ist dazu im Gegensatz zu dem angesprochenen Verfahren der EP 23218588.4 nicht nötig.

Es sei an dieser Stelle noch angemerkt, dass die hier beschriebene Vorgehensweise für alle denkbaren Elektro-Lichtbogenöfen einsetzbar ist. Beispiele für spezielle Ausführungen von Lichtbogenöfen sind sogenannte Submerged-Arc-Furnaces (SAF) und Smelter. Anders formuliert kann das Steuerverfahren für jeden Elektro-Lichtbogenofen (electric arc furnace, EAF) zum Einschmelzen von Metallen, sowohl Eisenmetallen wie auch Nichteisenmetallen, eingesetzt werden.

Wie bereits erwähnt und wie noch genauer ausgeführt werden wird, zielt die beschriebene Vorgehensweise auf die Regelung der Momentanleistung anstatt einer Regelung über mehrere Perioden bzw. längere Zeitabschnitte ab. Es wird also der genaue zeitliche Verlauf der Leistung geregelt. Die Momentanleistung wird durch den anderthalbfachen Realteil des Produkts von dem ausgangsseitigen komplexen Spannungsraumzeiger und dem ausgangsseitigem konjugiert komplexen Stromraumzeiger bestimmt und kann als momentane Wirkleistung bezeichnet werden. Aufgrund der bereits genannten Tatsache, dass der komplexe Flussraumzeiger zumindest näherungsweise senkrecht auf dem komplexen Raumzeiger für die ausgangsseitigen Ströme steht, wird die momentane Wirkleistung zumindest im Wesentlichen durch die ersten ausgangsseitigen Phasenspannungsanteile bestimmt.

Das bedeutet, durch die ersten ausgangsseitigen Phasenspannungsanteile wird die momentane Wirkleistung eingestellt, die dem Ofentransformator von dem Multilevelkonverter zugeführt wird. Durch die zweiten ausgangsseitigen Phasenspannungsanteile kann eingestellt werden, wie schnell der momentane Arbeitspunkt des Lichtbogenofens, wie er durch die der Steuereinrichtung bekannten ausgangsseitigen Phasenströme und die von der Steuereinrichtung ermittelten ersten ausgangsseitigen Phasenspannungsanteile bestimmt ist, geändert wird. Aufgrund der voneinander unabhängig möglichen Ermittlung der beiden Phasenspannungsanteile für jede Phase wird eine völlig flexible Steuerung des Multilevelkonverters erreicht, die zudem robust ist.

Die ersten und zweiten ausgangsseitigen Phasenspannungsanteile bzw. ihre Spannungsraumzeiger werden in jedem Zyklus neu ermittelt. Es ist daher eine Regelung des Lichtbogenofens möglich, die Störungen sehr schnell - binnen 1 ms und weniger - ausregeln kann.

Man könnte die Summe des Produkts der zweiten ausgangsseitigen Phasenspannungsanteile mit den ausgangsseitigen Phasenströmen zumindest im Wesentlichen einer momentanen Blindleistung zuordnen. Der Begriff ist jedoch unzutreffend und sogar irreführend, da die Blindleistung ebenso wie die Wirkleistung nur für einen Betrieb mit einer festen Frequenz und nur für ganzzahlige Vielfache der halben Periode (Periode = Kehrwert der Frequenz) jeweils einen sinnvollen Wert ergibt. Bei der vorliegenden Erfindung handelt es sich bei der Summe des Produkts der zweiten ausgangsseitigen Phasenspannungsanteile mit den ausgangsseitigen Phasenströmen ebenso wie bei der momentanen Wirkleistung um einen Momentanwert, der nur auf Basis von Momentanwerten des jeweiligen Zyklus berechnet wird und nur für den jeweiligen Zyklus gültig ist. Auch muss die Ermittlung der ersten und zweiten ausgangsseitigen Phasenspannungsanteile nicht einmal vom Ansatz her eine periodische Ansteuerung des Multilevelkonverters bewirken. Es ist zwar möglich, dass sich dieses Ergebnis einstellt, es ist jedoch nicht zwingend erforderlich.

Zweckmäßigerweise kann die Steuereinrichtung den komplexen Flussraumzeiger durch Integration aus den zuletzt zur Steuerung verwendeten ausgangsseitigen Phasenspannungen ermitteln. Dabei sind der komplexe Flussraumzeiger und die ausgangsseitigen Phasenströme Zustandsgrößen, d.h. deren zeitlicher Verlauf ist stetig, kann also nicht springen. Generell gilt in Vektorschreibweise für den aus den Schenkelflusskomponenten *Φ*1 bis *Φ*3 gebildeten Flussvektor ***Φ*** $U = \dot{Φ}$

Dabei ist *U* der aus den Spannungskomponenten U1 bis U3 gebildete Spannungsvektor. Für den magnetischen Flussvektor kann analog zu anderen Größen wie Strömen und Spannungen der Flussraumzeiger *Φ* gebildet werden, wobei generell die Unterstriche komplexe Raumzeiger markieren: ${Φ}_{_} = \frac{2}{3} ⋅ \left[Φ1+Φ2⋅exp\left(2iπ/3\right)+Φ3⋅exp\left(-2iπ/3\right)\right]$

Es gilt dann auch: ${U}_{_} = {\dot{Φ}}_{_}$

Daher kann der Flussraumzeiger *Φ* einfach durch Integration des Spannungsraumzeigers *U* gewonnen werden. Hierbei wird es bevorzugt, wenn als der magnetische Flussraumzeiger der primärseitige magnetische Flussraumzeiger des Ofentransformators verwendet wird, da sich in diesem Fall besonders einfache Formeln ergeben. Anders gesagt kann vorgesehen sein, dass als die magnetischen Schenkelflusskomponenten die primärseitigen magnetischen Schenkelflüsse des Ofentransformators verwendet werden. Alternativ ist es aber auch denkbar, als den magnetischen Flussraumzeiger den Hauptflussraumzeiger des Ofentransformators oder den sekundären Flussraumzeiger des Ofentransformators zu verwenden.

Soll auch der Wicklungswiderstand R der Primärwicklungen zur genaueren Ermittlung berücksichtigt werden, gilt ${U}_{_} - R {I}_{_} = {\dot{Φ}}_{_}$

Soll der Hauptfluss oder Sekundärfluss verwendet werden, kann beispielsweise der Zusammenhang ${U}_{_} - R {I}_{_} - {L}_{S} {\dot{I}}_{_} = {\dot{Φ}}_{_}$ verwendet werden, wobei *L*ₛ eine Streuinduktivität ist. Obige Formeln gelten, wenn jede der drei Wicklungen des Transformators die gleiche Streuinduktivität *L_{S}* sowie den gleichen Wicklungswiderstand *R* aufweist. Sollte dies nicht der Fall sein, sind obige Formeln zunächst in Vektorschreibweise zu formulieren, wobei dann eine 3 x 3-Diagonalmatrix ***R*** mit den drei Wicklungswiderständen *R*1, *R*2 und *R*3 auf der Hauptdiagonalen und eine 3 x 3-Streuinduktivitätsmatrix ***L**_{S}* zu verwenden sind. Anschließen können in bekannter Weise, analog der oben dargestellten Beschreibung für den Flussraumzeiger, aus den drei Komponenten der jeweiligen Vektoren jeweils zugehörige komplexe Raumzeiger gebildet werden.

Bei der Integration ist allerdings die Anfangsbedingung *Φ*(0) unbekannt. Diese kann jedoch auf einfache Art und Weise bestimmt werden, indem der Ofentransformator sekundärseitig im Leerlauf bis zur Eisensättigung mit zu einem bestimmten Spannungsraumzeiger korrespondierenden Spannungen beaufschlagt wird. Die Richtung des Spannungsraumzeigers kann dabei beliebig gewählt werden. Mithin kann vorgesehen sein, dass zur Ermittlung eines Startwerts des magnetischen Flussraumzeigers der Ofentransformator im Leerlauf, also bei nicht gezündetem Drehstrom-Lichtbogenofen, bis zur Sättigung betrieben wird und die Integration auf den bei Eintritt der Sättigung ermittelten Sättigungswert korrigiert wird. Zur Detektion der Sättigung kann der Verlauf des primärseitigen Stromes des Ofentransformators auf einen Anstieg ausgewertet werden. Anders gesprochen erkennt man das Erreichen der Eisensättigung durch den Anstieg Betrags des primärseitigen Stromraumzeigers, wonach die Anfangsbedingung so korrigiert wird, dass die bisherige Integration ebenfalls auf den festgestellten Sättigungswert kommt. Anschließend wird die Integration entsprechend fortgesetzt.

Vorzugsweise kann bei einer im weiteren Betrieb nach der Ermittlung des Startwerts erneut auftretenden Sättigung und vorliegender Flussregelung eine erneute Korrektur der Integration erfolgen. Das bedeutet, dass auch dann, wenn zu einem späteren Zeitpunkt ungewollt wieder die Sättigung erreicht wird, beispielsweise aufgrund von kleineren Integrationsfehlern, eine entsprechende Korrektur erfolgen kann und die Sättigung korrekt wieder verlassen werden kann.

In vorteilhafter Weiterbildung können ferner folgende mit der Zykluszeit immer wieder ausgeführte Schritte verwendet werden:
- der Steuereinrichtung werden ausgangsseitig des Multilevelkonverters fließende ausgangsseitige Phasenströme bekannt,
- die Steuereinrichtung bestimmt die ersten ausgangsseitigen Phasenspannungsanteile derart, dass die Summe der Produkte der ersten ausgangsseitigen Phasenspannungsanteile und der ausgangsseitigen Phasenströme gleich einer der Steuereinrichtung bekannten ausgangsseitigen, nur für den jeweiligen Zyklus gültigen momentanen Sollleistung ist.

Mit anderen Worten kann für die ersten ausgangsseitigen Phasenspannungsanteile ein erster Regler implementiert werden, der die vom Multilevelkonverter abgegebene Leistung mit einem momentanen, nur für den aktuellen Zyklus gültigen Sollwert, also einer Sollleistung, vergleicht. Es wird also eine Momentanregelung vorgenommen. Die ausgangsseitige momentane Sollleistung kann der Steuereinrichtung als entsprechender Leistungsverlauf bekannt sein. Der Leistungsverlauf kann konstant sein, kann aber auch variieren. Im Falle eines Variierens sollte die ausgangsseitige momentane Sollleistung vorzugsweise nur langsam variieren.

In einer besonders vorteilhaften Weiterbildung ist vorgesehen, dass der Steuereinrichtung in der komplexen Ebene ein Flussgebiet bekannt ist, innerhalb dessen der komplexe Flussraumzeiger des Ofentransformators liegen darf, und die Steuereinrichtung die zweiten ausgangsseitigen Phasenspannungsanteile unter Berücksichtigung des Abstands des komplexen Flussraumzeigers von den Grenzen des Flussgebietes ermittelt. Mithin kann, insbesondere zusätzlich zu dem ersten Regler hinsichtlich der Sollleistung, ein zweiter Regler implementiert werden, der den Betrag des Flussraumzeigers mit einem Sollwert und/oder Sollgebiet vergleicht. Hierbei wird ausgenutzt, dass die ersten ausgangsseitigen Phasenspannungsanteile bzw. der erste Regler keinen Einfluss auf den Flussbetrag haben, da dort senkrecht zum Flussraumzeiger agiert wird, sodass sich die Länge des Flussraumzeigers nicht verändert. Die hier beschriebene Flussregelung in der Richtung des Flussraumzeigers verändert hingegen bei Änderungen stets die Länge des Flussraumzeigers.

Es ist also möglich, dass der Steuereinrichtung in der komplexen Ebene ein Flussgebiet bekannt ist, innerhalb dessen der komplexe magnetische Flussraumzeiger des Ofentransformators liegen darf. In diesem Fall kann die Steuereinrichtung die zweiten ausgangsseitigen Phasenspannungsanteile unter Berücksichtigung des Abstands des komplexen Flussraumzeigers von den Grenzen des Flussgebietes derart ermitteln, dass das Flussgebiet nicht verlassen wird. Der Flussraumzeiger muss bestimmte Werte einhalten, weil anderenfalls Eisensättigung auftreten würde. Insbesondere darf der Betrag des magnetischen Flussraumzeigers nicht zu groß werden, weil anderenfalls im Ofentransformator Eisensättigung auftreten würde. Umgekehrt darf der Betrag des magnetischen Flussraumzeigers aber auch nicht zu klein werden, da dies zu einer zu großen Frequenz der ausgangsseitigen Phasenspannungen bzw. ausgangsseitigen Phasenströme führen würde bzw. zu nahe an die oben bereits erwähnte Singularität führen würde.

Dabei sei angemerkt, dass das Flussgebiet nicht notwendigerweise einfach zusammenhängend sein muss. Vielmehr ist es möglich, dass es "Löcher" aufweist, also verbotene Zonen, die in der komplexen Ebene vollständig von einem erlaubten Bereich umgeben sind. Auch ist es möglich, dass das zulässige Flussgebiet als Fläche verschwindet, also beispielsweise in eine geschlossene Linie entartet. Weiterhin ist es möglich, dass das Flussgebiet zeitlich variiert. Dies kann beispielsweise geschehen, wenn sich Randbedingungen ändern oder neue Randbedingungen bekannt werden. In einem Ausführungsbeispiel ist es beispielsweise denkbar, dass der Lichtbogenofen zumindest näherungsweise mit einer bestimmten Frequenz betrieben werden soll, beispielsweise 50 oder 60 Hz, und ein Fluss-Sollwert, mit dem der Betrag des Flussraumzeigers verglichen wird, so berechnet wird, dass sich die bestimmte Frequenz zumindest näherungsweise einstellt.

Die hier beschriebene Flussregelung hat den Vorteil, dass die Frequenz direkter steuerbar ist. Mit dem Betrag des magnetischen Flussraumzeigers des Ofentransformators ist die Frequenz der ausgangsseitigen Spannungen verknüpft. Eine Verkleinerung des Flussbetrags bei gleichbleibendem Betrag des ausgangsseitigen Spannungsraumzeigers bewirkt eine höhere Frequenz, eine Vergrößerung des Flussbetrags bei gleichbleibendem Betrag des ausgangsseitigen Spannungsraumzeigers eine Erniedrigung der Frequenz. (Entsprechend bewirkt eine Verkleinerung/Vergrößerung des Betrags des ausgangsseitigen Spannungsraumzeigers eine Verkleinerung/Vergrößerung der Frequenz, wenn man den Betrag des Flussraumzeigers beibehält.)

Durch die Flussregelung kann eine Eisensättigung des Ofentransformators verlässlich vermieden werden. Dadurch kann ein sogenannter "Inrush" vermieden werden, wobei auch während des weiteren Betriebs mit hoher Sicherheit keine Eisensättigung auftritt. Eine Eisensättigung ist dabei ein Betriebszustand, der mit hoher Wahrscheinlichkeit zu einer Fehlfunktion der gesamten Schmelzanlage führt. Das erfindungsgemäße Vorgehen vermeidet insbesondere einen kritischen Mechanismus, in dem eine Spannung zu lange in dieselbe Richtung durch den Multilevelkonverter bereitgestellt wurde, sodass der Flussbetrag den Sättigungswert des Ofentransformators übersteigt. Dies führt zu einem starken Anstieg des mindestens einen Primärstroms, sodass eine Strombegrenzung des Multilevelkonverters den mindestens einen Strom begrenzt, um den Multilevelkonverter vor Überstrom zu schützen. Hierdurch bricht die zugehörige Sekundärspannung auf einen Wert nahe Null ein. Der gezündete Lichtbogen des Lichtbogenofens erlischt und der Sekundärstrom sinkt ebenso auf Null. Der Multilevelkonverter startet dann neu und würde erneut eine ausgangsseitige Spannung zu lange in dieselbe Richtung stellen, beispielsweise, weil beim Neustart der Ofentransformator bereits einen von Null verschiedenen Fluss aufwies. Dies ist möglich, da der Eisenkern keinen Luftspalt aufweist und daher aus der Tatsache, dass kein Strom fließt, nicht auf die Abwesenheit eines Flusses geschlossen werden kann. Eine solche, sich ständig wiederholende Grenzfall-Abfolge kann mit dem beschriebenen Vorgehen vermieden werden.

In einer besonders zweckmäßigen Weiterbildung kann vorgesehen sein, dass die Steuereinrichtung zusätzlich zu den zweiten ausgangsseitigen Phasenspannungsanteilen wenigstens einen Vorsteuerwert für die ersten ausgangsseitigen Phasenspannungsanteile, die eine Abweichung einer Parallelität des Spannungsraumzeigers der ersten ausgangsseitigen Phasenspannungen zu dem komplexen Stromraumzeiger der ausgangsseitigen Phasenströme hinsichtlich der Regelung auf die Sollleistung kompensiert, ermittelt.

Der beschriebene erste Regler geht hierbei davon aus, dass der Raumzeiger der ersten ausgangsseitigen Phasenspannungsanteile in die Richtung des Raumzeigers des ausgangsseitigen Phasenstromes zeigt. Dies gilt jedoch nicht immer exakt, das bedeutet, der Raumzeiger der ersten ausgangsseitigen Phasenströme und die Senkrechte zum Flussraumzeiger können einen, wenn auch erwartungsgemäß kleinen, Winkel miteinander einschließen. Somit kann die Aktion des beschriebenen zweiten Reglers für die zweiten ausgangsseitigen Phasenspannungsanteile durchaus eine Änderung der Leistung hervorrufen. In einem solchen Fall sind die Regler also nur teilweise entkoppelt. Sie können aber wieder vollständig entkoppelt werden, wenn wenigstens ein Vorsteuerwert so ermittelt wird, dass die durch die Änderung der zweiten ausgangsseitigen Phasenspannungsanteile verursachte Leistungsänderung wieder kompensiert wird. Dann wird am ersten Regler wegen der Flussänderung keine Regelabweichung entstehen und beide Regler sind wieder vollständig entkoppelt. Hierbei kann der Vorsteuerwert leicht ermittelt werden, da die Zustandsgrößen und somit der Stromraumzeiger genau wie der Flussraumzeiger bekannt sind, mithin auch der oben genannte Winkel.

Eine zweckmäßige Weiterbildung der vorliegenden Erfindung sieht vor,
- dass der Steuereinrichtung Maximalwerte für die ausgangsseitigen Phasenspannungen bekannt sind und die Steuereinrichtung die ausgangsseitigen Phasenspannungen bei Überschreitung auf die Maximalwerte oder die ersten ausgangsseitigen Phasenspannungsanteile unter Berücksichtigung der Maximalwerte begrenzt, und/oder
- dass der Steuereinrichtung in der komplexen Ebene ein Spannungsgebiet bekannt ist, innerhalb dessen ein durch die ausgangsseitigen Phasenspannungen bestimmter komplexer ausgangsseitiger Gesamtspannungsraumzeiger liegen darf, und die Steuereinrichtung die ausgangsseitigen Phasenspannungen oder die ersten ausgangsseitigen Phasenspannungsanteile bei außerhalb des Spannungsgebiets liegendem Gesamtspannungsraumzeiger derart begrenzt, dass er an einer Grenze des Spannungsgebiets liegt.

Insbesondere kann dann, wenn ein Maximalwert überschritten ist bzw. der Gesamtspannungsraumzeiger außerhalb des Spannungsgebiets liegt, ein Begrenzungsmodus, in dem die jeweiligen ausgangsseitigen Phasenspannungen/ersten Phasenspannungsanteile auf dem Maximalwert bzw. an der jeweiligen Grenze festgehalten werden, aktiviert werden, wobei der Begrenzungsmodus dann beendet wird, wenn die Solleistung über die aktuell bereitgestellte Leistung steigt. Hierbei ist die Verwendung von Spannungsgebieten besonders bevorzugt, da die Limitierungen oftmals zeitlich nicht konstant sind, sondern sehr spezifisch auf dem momentanen Betriebszustand des Multilevelkonverters basieren. Durch die Definition eines vom jeweiligen Betriebszustand abhängigen Spannungsgebietes ist weiterhin eine Berücksichtigung des Umstands möglich, dass die Limitierungen sehr spezifisch auf der genauen Auslegung des Multilevelkonverters basieren können. Auch für das Spannungsgebiet gilt, dass es zu einer geschlossenen Linie entarten kann.

In aller Regel bezieht der Multilevelkonverter aufgrund einer entsprechenden Ansteuerung durch die Steuereinrichtung aus eingangsseitigen Phasen eines Versorgungsnetzes eingangsseitige Phasenströme. Das Versorgungsnetz wird mit einer Netzfrequenz betrieben. Die Netzfrequenz liegt üblicherweise bei 50 Hz oder 60 Hz. Natürlich sind auch andere Netzfrequenzen möglich. Das Versorgungsnetz führt in der Regel eine Mittelspannung von 11 kV, 30 kV, 33 kV oder 110 kV.

Vorzugsweise ermittelt die Steuereinrichtung mit der Zykluszeit immer wieder die Ansteuerung des Multilevelkonverters derart, dass ein durch die eingangsseitigen Phasenströme bestimmter komplexer eingangsseitiger Stromraumzeiger in der komplexen Ebene unter einem vorbestimmten Phasenwinkel relativ zu einem durch die eingangsseitigen Phasenspannungen der eingangsseitigen Phasen des Versorgungsnetzes bestimmten komplexen eingangsseitigen Spannungsraumzeiger orientiert ist, insbesondere parallel zu dem komplexen eingangsseitigen Spannungsraumzeiger orientiert ist. Dadurch wird dem Versorgungsnetz, betrachtet über eine ganze oder zumindest eine halbe Periode, zusätzlich zur Wirkleistung eine definierte Blindleistung entnommen bzw. - im Falle einer parallelen Orientierung - keine Blindleistung entnommen. Dadurch ist es möglich, aus dem Versorgungsnetz, jeweils betrachtet über ganze oder zumindest halbe Perioden, ausschließlich Wirkleistung zu beziehen oder für diese Zeiträume gezielt einen Bezug an Blindleistung aus dem Versorgungsnetz einzustellen. Der Bezug einer definierten Blindleistung kann beispielsweise sinnvoll sein, um die Blindleistung anderer an das Versorgungsnetz angeschlossener Verbraucher zu kompensieren. Über mehrere halbe Perioden gesehen kann aber auch der Bezug an Blindleistung gegebenenfalls zeitlich variieren, vorzugsweise langsam variieren.

Die Ansteuerung des Multilevelkonverters, so dass er eingangsseitig aus dem Versorgungsnetz vorgegebene Ströme (und in Verbindung mit den eingangsseitigen Phasenspannungen auch momentane Leistungen) bezieht, ist als solche ohne weiteres möglich. Die Möglichkeiten zur entsprechenden Ansteuerung sind der Fachperson bekannt. Entscheidend ist in dieser Ausgestaltung die Ermittlung der eingangsseitigen Phasenströme.

Vorzugsweise ermittelt die Steuereinrichtung mit der Zykluszeit immer wieder die Ansteuerung des Multilevelkonverters derart, dass der Multilevelkonverter aus den eingangsseitigen Phasen eingangsseitige momentane Leistungen entsprechend für den jeweiligen Zyklus gültiger Anteile für die eingangsseitigen Phasen bezieht. Wenn über mehrere Zyklen hinweg die Anteile für die eingangsseitigen Phasen entsprechend vorgegeben werden, erfolgt auch eine rein symmetrische Belastung des Versorgungsnetzes. In diesem Fall variieren die Anteile für die eingangsseitigen Phasen mit einem gleichbleibenden Phasenversatz, insbesondere ohne Phasenversatz, mit den eingangsseitigen Phasenspannungen.

In Verbindung mit einer sich nur zeitlich langsam ändernden Vorgabe der ausgangsseitigen momentanen Wirkleistung (und gegebenenfalls auch der eingangsseitigen Blindleistung) kann somit aus Sicht des Versorgungsnetzes ein nahezu völlig flickerfreier Betrieb des Lichtbogenofens erfolgen. Der Lichtbogenofen wird dadurch im Ergebnis zu einer gut handhabbaren - sozusagen "gezähmten" - Last. Dies gilt auch dann, wenn weder eingangsseitig noch ausgangsseitig des Multilevelkonverters aktive oder passive Kompensatoren angeordnet sind. Dies gilt weiterhin auch dann, wenn sich extreme Betriebszustände des Lichtbogenofens ergeben, beispielsweise einer der Lichtbögen kurzzeitig abreißt.

Vorzugsweise ist der Multilevelkonverter als Zwischenkreisumrichter ausgebildet, der zu einem Versorgungsnetz hin einen eingangsseitigen Gleichrichter und zum Ofentransformator hin einen ausgangsseitigen Wechselrichter aufweist, die über einen Gleichspannungskreis miteinander verbunden sind. In diesem Fall kann eine nahezu entkoppelte Ermittlung der Ansteuerung des Wechselrichters und des Gleichrichters erfolgen.

Ein erfindungsgemäßes Steuerprogramm für eine Steuereinrichtung zum Steuern eines Multilevelkonverters, der Elektroden eines Drehstrom-Lichtbogenofens über einen Ofentransformator mit elektrischer Energie versorgt, umfasst Maschinencode, der von der Steuereinrichtung unmittelbar abarbeitbar ist, wobei die Abarbeitung des Maschinencodes durch die Steuereinrichtung bewirkt, dass die Steuereinrichtung ein erfindungsgemäßes Steuerverfahren ausführt.

Eine erfindungsgemäße Steuereinrichtung zum Steuern eines Multilevelkonverters, der Elektroden eines Drehstrom-Lichtbogenofens über einen Ofentransformator mit elektrischer Energie versorgt, ist mit einem erfindungsgemäßen Steuerprogramm programmiert, so dass die Steuereinrichtung im Betrieb ein erfindungsgemäßes Steuerverfahren ausführt.

Ein erfindungsgemäßer Multilevelkonverter versorgt Elektroden eines Drehstrom-Lichtbogenofens über einen Ofentransformator mit elektrischer Energie und wird von einer erfindungsgemäßen Steuereinrichtung gesteuert.

Sämtliche Ausführungen hinsichtlich des erfindungsgemäßen Steuerverfahrens lassen sich analog auf das erfindungsgemäße Steuerprogramm, die erfindungsgemäße Steuereinrichtung und den erfindungsgemäßen Multilevelkonverter übertragen und umgekehrt, sodass auch mit den weiteren Gegenständen die genannten Vorteile erhalten werden können.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- Fig 1: einen Lichtbogenofen und dessen Energieversorgung,
- Fig. 2: einen Arm eines Multilevelkonverters,
- Fig. 3: ein Submodul,
- Fig. 4: ein weiteres Submodul,
- Fig. 5: einen Ablaufplan eines Ausführungsbeispiels des erfindungsgemäßen Steuerverfahrens,
- Fig. 6: ein Zeitdiagramm,
- Fig. 7: ein Zeigerdiagramm für diverse Zustandsgrößen,
- Fig. 8: einen Ablaufplan zu Beginn einer Betriebsphase,
- Fig. 9: einen Ablaufplan für zusätzliche Schritte,
- Fig.: 10 ein Zeigerdiagramm für komplexe elektrische Größen, und
- FIG 11: einen Lichtbogenofen und dessen Energieversorgung.

### Beschreibung der Ausführungsformen

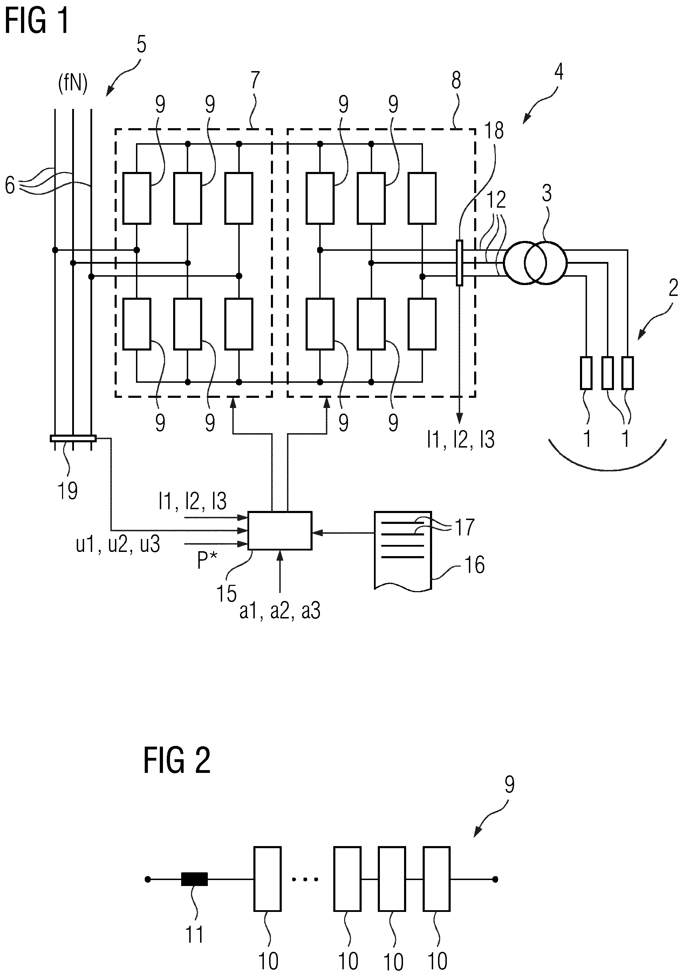

Fig. 1 zeigt schematisch einen Drehstrom-Lichtbogenofen 2 und dessen Energieversorgung. Elektroden 1 des Drehstrom-Lichtbogenofens 2 werden über einen Ofentransformator 3 von einem Multilevelkonverter 4 mit elektrischer Energie versorgt. Der Lichtbogenofen 2 kann von beliebiger Art sein. Es kann sich um einen Lichtbogenofen 2 im engeren Sinne (EAF = electric arc furnace) handeln. Es kann sich aber auch um einen sogenannten SAF (= submerged arc furnace) oder um einen SMELTER handeln. In dem Lichtbogenofen 2 kann nach Bedarf Eisen, Stahl, Aluminium oder auch ein anderes Metall geschmolzen werden.

Der Multilevelkonverter 4 wird seinerseits in aller Regel aus einem Versorgungsnetz 5 mit mehreren eingangsseitigen Phasen 6 (in der Regel drei Phasen 6) mit elektrischer Energie versorgt. Das Versorgungsnetz 5 kann beispielsweise ein Mittelspannungsnetz mit einer Nennspannung von 11 kV, 30 kV, 33 kV oder - in Einzelfällen - von 110 kV sein. Das Versorgungsnetz 5 wird mit einer Netzfrequenz fN betrieben. Die Netzfrequenz fN liegt in der Regel bei 50 Hz oder 60 Hz.

Der Multilevelkonverter 4 ist zwischen dem Versorgungsnetz 5 und dem Ofentransformator 3 angeordnet, der Ofentransformator 3 zwischen dem Multilevelkonverter 4 und den Elektroden 1. Die elektrische Energie fließt somit vom Versorgungsnetz 5 zum Multilevelkonverter 4, von dort weiter zum Ofentransformator 3 und von dort schließlich zu den Elektroden 1.

Konkret in der Ausgestaltung von Fig. 1 ist der Multilevelkonverter 4 als Zwischenkreisumrichter ausgebildet, der zum Versorgungsnetz 5 hin einen eingangsseitigen Gleichrichter 7 und zum Ofentransformator 3 hin einen ausgangsseitigen Wechselrichter 8 aufweist. Der Gleichrichter 7 und der Wechselrichter 8 sind über einen Gleichspannungskreis miteinander verbunden.

Multilevelkonverter sind Fachleuten allgemein bekannt. Multilevelkonverter weisen - siehe auch Fig. 2 - Arme 9 auf. Von den Armen 9 sind in Fig. 1 exemplarisch nur einige wenige mit ihrem Bezugszeichen versehen.

Die Arme 9 bestehen gemäß Fig. 2 ihrerseits aus einer mehrstufigen Reihenschaltung von Submodulen 10. In der Regel sind pro Arm 9 acht oder mehr derartiger Submodule 10 vorhanden. Die Submodule 10 sind untereinander gleich aufgebaut. In der Regel befindet sich am Ende der Reihenschaltung weiterhin eine Drossel 11. Die Drossel 11 befindet sich bei einem Arm 9 des Gleichrichters 7 meist an dem einer eingangsseitigen Phase 6 zugewandten Ende des jeweiligen Armes 9. In analoger Weise befindet sich die Drossel 11 bei einem Arm 9 des Wechselrichters 8 an dem einer ausgangsseitigen Phase 12 (siehe Fig. 1) zugewandten Ende des jeweiligen Armes 9.

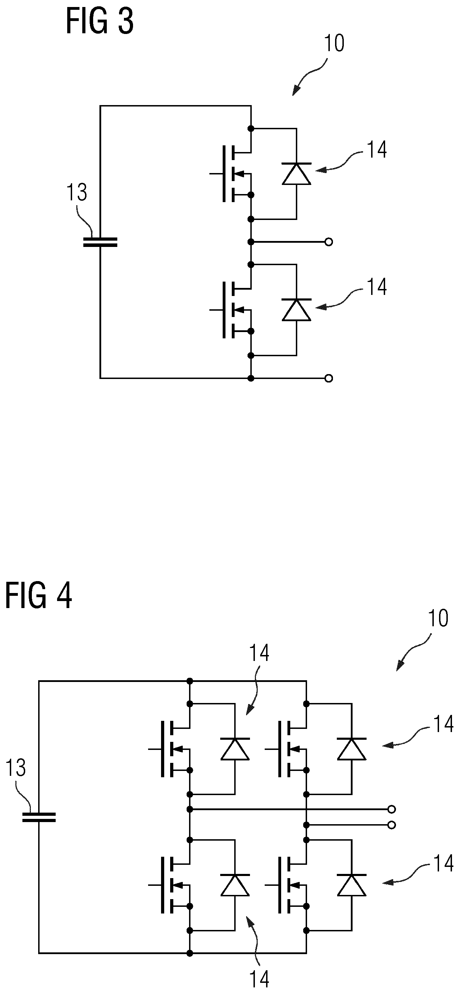

Gemäß Fig. 3 umfasst jedes Submodul 10 einen Speicherkondensator 13 und selbstgeführte Halbleiterschalter 14, die hier als Einheit aus einem Feldeffekttransistor und einer Diode gezeigt sind. Der Begriff "selbstgeführt" bedeutet, dass die Halbleiterschalter 14 durch den Halbleiterschaltern 14 von außen zugeführte Steuersignale sowohl zuschaltbar als auch abschaltbar sind. Beispielsweise können die selbstgeführten Halbleiterschalter 14 auch als IGBTs ausgebildet sein. Der Begriff "selbstgeführt" steht im Gegensatz zum Begriff "netzgeführt". Dieser Begriff bedeutet, dass der jeweilige Halbleiterschalter zwar gezielt zugeschaltet werden kann, jedoch nicht durch ein externes Steuersignal abgeschaltet werden kann. Ein Beispiel für einen netzgeführten Halbleiterschalter ist ein "normaler" Thyristor.

Gemäß Fig. 3 weisen die Submodule 10 jeweils einen einzigen Speicherkondensator 13 und genau zwei Halbleiterschalter 14 auf. Diese Konfiguration ist die Minimalkonfiguration der Submodule 10. Alternativ könnten die Submodule 10 gemäß der Darstellung von Fig. 4 beispielsweise einen Speicherkondensator 13 und vier Halbleiterschalter 14 in Brückenschaltung aufweisen. Auch könnten die Submodule 10 mehrere einzeln schaltbare Speicherkondensatoren 13 aufweisen. In diesem Fall müssen pro eigenständig schaltbarem Speicherkondensator 13 mindestens zwei Halbleiterschalter 14 vorhanden sein.

Die Halbleiterschalter 14 jedes Submoduls 10 sind unabhängig von den Halbleiterschaltern 14 der anderen Submodule 10 schaltbar. Dies gilt unabhängig davon, ob die anderen Submodule 10 im selben oder in einem anderen Arm des Umrichters 6 angeordnet sind wie das betreffende Submodul 10. Je nach Schaltzustand der Halbleiterschalter 14 des jeweiligen Submoduls 10 ist der Speicherkondensator 13 des jeweiligen Submoduls 10 alternativ überbrückt oder aktiv. Wenn der in Fig. 3 obere Halbleiterschalter 14 eines Submoduls 10 geschlossen ist und der andere Halbleiterschalter 14 geöffnet ist, ist der Speicherkondensator 13 des jeweiligen Submoduls 10 aktiv. Wenn umgekehrt der in Fig. 3 obere Halbleiterschalter 14 geöffnet ist und der untere Halbleiterschalter 14 geschlossen ist, ist der Speicherkondensator 13 des jeweiligen Submoduls 10 überbrückt. Wenn der Speicherkondensator 13 aktiv ist, trägt die über dem Speicherkondensator 13 abfallende positivwertige Spannung zur resultierenden Spannung des jeweiligen Armes 9 bei. Ein in dem jeweiligen Arm 9 fließender Strom bewirkt - je nach Richtung des in dem Arm 9 fließenden Stromes - ein Laden oder ein Entladen des Speicherkondensators 13. Wenn der Speicherkondensator 13 hingegen überbrückt ist, trägt die über dem Speicherkondensator 13 abfallende Spannung nicht zur resultierenden Spannung des jeweiligen Armes 9 bei. Ein in dem jeweiligen Arm 9 fließender Strom bewirkt weder ein Laden noch ein Entladen des Speicherkondensators 13.

In analoger Weise ist auch der Speicherkondensator 13 des Submoduls 10 von Fig. 4 je nach Ansteuerzustand der Halbleiterschalter 14 aktiv oder überbrückt. Im Falle der Ausgestaltung von Fig. 4 existiert jedoch ein weiterer Schaltzustand, bei dem die über dem Speicherkondensator 13 abfallende Spannung mit inverser Polung zur resultierenden Spannung des jeweiligen Armes 9 beiträgt.

Der Multilevelkonverter 4 wird gemäß Fig. 1 von einer Steuereinrichtung 15 gesteuert. Mittels der Steuereinrichtung 15 erfolgt insbesondere die Ansteuerung der Halbleiterschalter 14 der Submodule 10. Die Art und Weise, wie die Halbleiterschalter 14 der Submodule 10 angesteuert werden, ist Fachleuten bekannt.

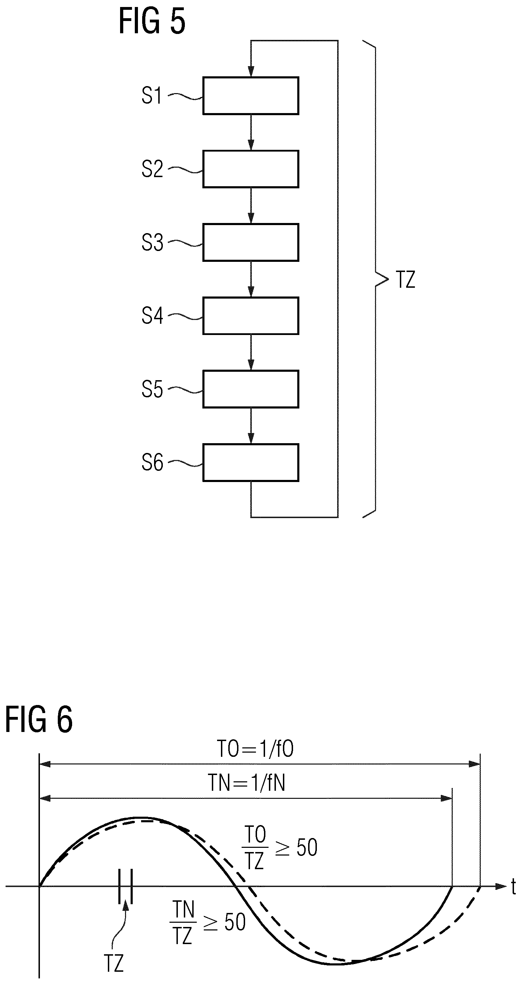

Die Steuereinrichtung 15 ist mit einem Steuerprogramm 16 programmiert. Das Steuerprogramm 16 umfasst Maschinencode 17, der von der Steuereinrichtung 15 unmittelbar abarbeitbar ist. Die Programmierung der Steuereinrichtung 15 mit dem Steuerprogramm 16 bzw. - im Ergebnis gleichbedeutend - die Abarbeitung des Maschinencodes 17 durch die Steuereinrichtung 15 bewirkt, dass die Steuereinrichtung 15 ein Steuerverfahren ausführt, das nachstehend in Verbindung mit Fig. 5 näher erläutert wird.

Gemäß Fig. 5 führt die Steuereinrichtung 15 zyklisch immer wieder Schritte S1 bis S6 aus. Die Ausführung erfolgt mit einer Zykluszeit TZ. Die Zykluszeit TZ ist entsprechend der Darstellung in Fig. 6 sehr klein. In aller Regel liegt die Zykluszeit TZ unter 1 ms. Insbesondere ist die Zykluszeit TZ erheblich kleiner als eine Periodenzeit TN = 1/fN des Versorgungsnetzes 5. Konkret zeigt Fig. 6 eine einzelne Periode einer der an den eingangsseitigen Phasen 6 anstehenden Spannungen, die zugehörige Periodenzeit TN und die Zykluszeit TZ.

Vorzugsweise gilt, dass der Kehrwert der Zykluszeit TZ mindestens zwanzigmal so groß wie die Netzfrequenz fN ist, vorzugsweise, wie gezeigt, mindestens fünfzigmal so groß. Bei einer Netzfrequenz fN von 50 Hz liegt somit die Zykluszeit TZ vorzugsweise bei 1,0 ms oder darunter, beispielsweise bei 0,4 ms, 0,2 ms oder 0,1 ms. Konkret kann beispielsweise ein Regeltakt von 8 kHz oder 16 kHz realisiert werden, was mit einer Zykluszeit TZ von 125 µs bzw. 62,5 µs korrespondiert. Diese Festlegung der Zykluszeit TZ trägt dem Umstand Rechnung, dass für eine robuste und glatte Regelung mehrere Abtastungen benötigt werden, während derer sich ausgangsseitige Phasenströme *I*1, *I*2, *I*3, die der Multilevelkonverter 4 dem Ofentransformator 3 zuführt, nicht signifikant ändern.

Analoge Ausführungen gelten für das Verhältnis der Zykluszeit TZ zu einer Periodenzeit TO des Ofentransformators 3. Die Periodenzeit TO ist der Kehrwert der Frequenz fO, mit welcher der Ofentransformator 3 betrieben wird. Die Ofenfrequenz fO kann - rein zufällig - den gleichen Wert wie die Netzfrequenz fN aufweisen. In der Regel sind die beiden Frequenzen fO, fN aber voneinander verschieden.

Gemäß Fig. 5 werden der Steuereinrichtung 15 im Schritt S1 ausgangsseitige Phasenströme *I*1 bis *I*3 bekannt. Beispielsweise kann die Steuereinrichtung 15 die ausgangsseitigen Phasenströme *I*1 bis *I*3 (genauer: die entsprechenden Messwerte) im Schritt S1 von einer Messeinrichtung 18 (siehe Fig. 1) entgegennehmen. Die ausgangsseitigen Phasenströme *I*1 bis *I*3 sind diejenigen Ströme, die momentan ausgangsseitig des Multilevelkonverters 4 fließen. In der Regel handelt es sich um die Ströme eingangsseitig des Ofentransformators 3. Falls es sich umgekehrt um die Ströme ausgangsseitig des Ofentransformators 3 handelt, kann anhand des Übersetzungsverhältnisses des Ofentransformators 3 ohne weiteres eine Umrechnung auf die Ströme eingangsseitig des Ofentransformators 3 erfolgen. Besonders zweckmäßig ist es, wenn die eingangsseitigen und die ausgangsseitigen Ströme des Ofentransformators 3 erfasst werden. Dann wird es ermöglicht, während des Betriebs des Lichtbogenofens eine eintretende Eisensättigung sofort zu erkennen, nachdem anderenfalls die Eisensättigung nur erkannt wird, wenn der Ofentransformator 3 im Leerlauf ist. Die Messwerte *I*1 bis *I*3 sind nur für den jeweiligen Zyklus gültig.

Genau genommen ist es ausreichend, wenn die Steuereinrichtung 15 zwei der drei ausgangsseitigen Phasenströme *I*1 bis *I*3 entgegennimmt, da stets und zu jedem Zeitpunkt die Beziehung $I 1 + I 2 + I 3 = 0$ (1) gelten muss. Anhand von zwei der ausgangsseitigen Phasenströme *I*1 bis *I*3 kann daher stets der verbleibende ausgangsseitige Phasenstrom *I*1 bis *I*3 ermittelt werden.

Im Schritt S2 ermittelt die Steuereinrichtung 15 aus zuletzt durch den Multilevelkonverter 4 bereitgestellten ausgangsseitigen Phasenspannungenn *U*1, *U*2 und *U*3 als Zustandsgrößen, genauer einem entsprechenden Spannungsraumzeiger *U*, definiert als ${U}_{_} = \frac{2}{3} ⋅ \left[U1+U2⋅exp\left(2iπ/3\right)+U3⋅exp\left(-2iπ/3\right)\right] ,$ (2) einen komplexen Flussraumzeiger *Φ* des magnetischen Flusses *Φ* in dem Ofentransformator 3, hier des primärseitigen magnetischen Flusses in dem geschlossenen Eisenkern, mittels der oben bereits erläuterten Beziehung ${U}_{_} - R {I}_{_} = {\dot{Φ}}_{_} .$ (2a)

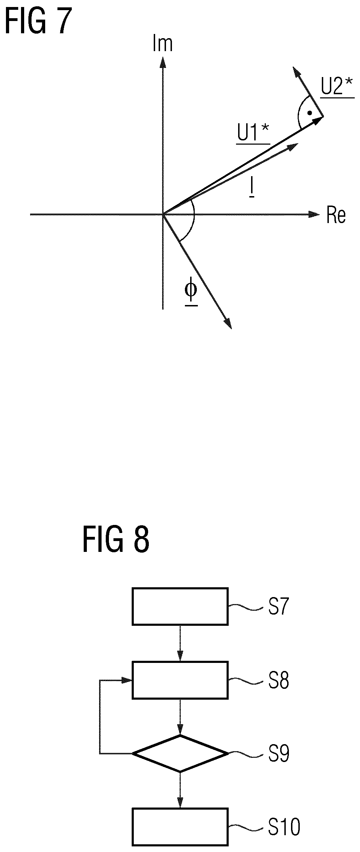

Fig. 7 zeigt die komplexe Ebene und in der komplexen Ebene den entsprechend der Spannung definierten Stromzeiger *I* des komplexen ausgangsseitigen Stroms gemeinsam mit dem Flussraumzeiger *Φ*.

Im Schritt S3 ermittelt die Steuereinrichtung 15 erste ausgangsseitige Phasenspannungsanteile *U11*, U12*, U13*.* Die Ermittlung erfolgt derart, dass ein Spannungsraumzeiger U1* einer komplexen ersten ausgangsseitigen Spannung, der gemäß der Beziehung ${U 1 *}_{¯} = \frac{2}{3} ⋅ \left[U11*+U12*⋅exp\left(2iπ/3\right)+U13*⋅exp\left(-2iπ/3\right)\right]$ (3) durch die ersten ausgangsseitigen Phasenspannungsanteile *U11*, U12*, U13** bestimmt ist, in der komplexen Ebene senkrecht zu dem komplexen Flussraumzeiger *Φ* und damit zumindest im Wesentlichen parallel zu dem komplexen Stromraumzeiger *I* der ausgangsseitigen Ströme orientiert ist, der der Steuereinrichtung 15 entweder bereits explizit bekannt ist oder zumindest durch die der Steuereinrichtung 15 bekannten ausgangsseitigen Phasenströme *I*1 bis *I*3 bereits eindeutig bestimmt ist.

Fig. 7 zeigt auch den komplexen ersten ausgangsseitigen Spannungsraumzeiger *U*1*. Der komplexe erste ausgangsseitige Spannungsraumzeiger U1* ist in Fig. 7 unter einem sehr geringen Winkel zu dem komplexen ausgangsseitigen Stromraumzeiger *I* eingezeichnet. Dieser Winkel kann gleich 0° sein, wenn der Stromraumzeiger *I* exakt senkrecht auf dem Flussraumzeiger *Φ* steht, was aber im Allgemeinen nicht der Fall ist. Daher wird er in der Praxis, wie angedeutet, einen kleinen, von 0° unterschiedlichen Wert aufweisen. In jedem Fall steht der Raumzeiger *U1** der ersten ausgangsseitigen Phasenspannungsanteile *U11*, U12*, U13** senkrecht auf dem Flussraumzeiger *Φ*.

Es ist möglich, dass die Steuereinrichtung 15 zuerst die ersten ausgangsseitigen Phasenspannungsanteile *U11*, U12*, U13** ermittelt und dann den komplexen ersten ausgangsseitigen Spannungsraumzeiger U1* ermittelt. Einfacher ist es jedoch in der Regel, wenn die Steuereinrichtung 15 zuerst den komplexen ersten ausgangsseitigen Spannungsraumzeiger *U*1* ermittelt und dann anhand der Beziehungen $U 11 * = Re \left[{U 1 *}_{¯}\right] ,$ (4) $U {12}^{∗} = Re \left[{U {1}^{∗}}_{¯}⋅exp\left(-2iπ/3\right)\right] und$ (5) $U {13}^{∗} = Re \left[{U {1}^{∗}}_{¯}⋅exp\left(-2iπ/3\right)\right] .$ (6) die ersten ausgangsseitigen Phasenspannungsanteile *U11*, U12*, U13** ermittelt.

Weiterhin ermittelt die Steuereinrichtung 15 im Schritt S4 zweite ausgangsseitige Phasenspannungsanteile *U*21*, *U*22*, *U*23*. Die Ermittlung erfolgt derart, dass ein komplexer zweiter ausgangsseitiger Spannungsraumzeiger *U*2*, der durch die zweiten ausgangsseitigen Phasenspannungsanteile *U*21*, *U*22*, U23* bestimmt ist, in der komplexen Ebene parallel zu dem komplexen Flussraumzeiger *Φ* (und damit auch orthogonal zum Spannungsraumzeiger U1* der komplexen ersten ausgangsseitigen Spannung) orientiert ist. Fig. 7 zeigt auch den komplexen zweiten ausgangsseitigen Spannungsraumzeiger *U*2*.

Ebenso wie im Schritt S3 ist es möglich, dass die Steuereinrichtung 15 zuerst die zweiten ausgangsseitigen Phasenspannungsanteile *U21*, U*22*, U23* ermittelt und dann den komplexen zweiten ausgangsseitigen Spannungsraumzeiger U2* ermittelt. Einfacher ist es jedoch in der Regel, wenn die Steuereinrichtung 15 zuerst den komplexen zweiten ausgangsseitigen Spannungsraumzeiger U2* ermittelt und dann die zweiten ausgangsseitigen Phasenspannungsanteile *U*21*, *U*22*, U23* ermittelt. Die Umrechnungen sind völlig analog zu den Umrechnungen zwischen den ersten ausgangsseitigen Phasenspannungsanteilen *U11*, U12*, U13** und dem komplexen ersten ausgangsseitigen Spannungsraumzeiger *U*1*. Hierzu sei noch angemerkt, dass, nachdem die Richtung für den ersten und den zweiten ausgangsseitigen Spannungsraumzeiger *U*1* und *U*2* vorgegeben ist, die Ermittlung sich auf ihre Länge bezieht, die durch Parameter k1 und k2 beschrieben werden kann.

Vorliegend wird im Schritt S4 auch ein Vorsteuerwert k1s für die ersten ausgangsseitigen Phasenspannungsanteile *U11*, U12*, U13** bzw. den komplexen ersten ausgangsseitigen Spannungsraumzeiger *U*1* ermittelt, der die in Fig. 7 angedeutete Winkelabweichung zwischen dieser und dem Stromraumzeiger *I* kompensiert. Der Vorsteuerwert kann beispielsweise zwei Anteile umfassen. Ein erster Anteil kann ein auf *U*1* anzuwendender Faktor sein. Der zweite Anteil kann aus *U*2* bzw. äquivalent aus *k*2 berechnet werden. Wenn die in Fig. 7 gezeigte Winkelabweichung von Null verschieden ist, korrigiert dieser zweite Anteil die sich ergebenden Leistungsänderungen, wenn *k*2 von Null verschieden ist. Entsprechend korrigiert der erste Anteil bei von Null verschiedener Winkelabweichung die verminderte Wirkung von k1 auf Leistungsänderungen. Der erste Anteil kann dann entfallen, wenn zur Ermittlung von k1 eine Formel zur Leistungsberechnung verwendet wird, die auch für eine von Null verschiedene Winkelabweichung noch korrekt ist. Mithin sind verschiedene konkrete Varianten denkbar, um die Regler zu entkoppeln.

Es ist auch möglich, dass die Steuereinrichtung 15 zur Bestimmung der aktualisiert durch Ansteuerung des Multilevelkonverters 4 bereitzustellenden ausgangsseitigen Phasenspannungen zuerst die beiden komplexen ausgangsseitigen Spannungsraumzeiger *U*1**,* *U*2*** (unter Berücksichtigung des Vorsteuerwerts k1s) in der komplexen Ebene addiert und danach anhand dieser Summe die ausgangsseitigen Phasenspannungen ermittelt. Dementsprechend ist es möglich, dass die ersten und die zweiten Phasenspannungsanteile *U11*, U12*, U13** bzw. *U*21*, *U*22**,* U23* nicht explizit ermittelt werden.

Im Schritt S5 ermittelt die Steuereinrichtung 15 eine Ansteuerung C für den Multilevelkonverter 4. Die Ermittlung des Schrittes S5 erfolgt basierend auf den Summen der jeweiligen ersten und zweiten ausgangsseitigen Phasenspannungsanteile *U*11* und *U*21* bzw. *U*12* und *U*22* bzw. *U*13*** und *U*23* bzw. der Summen der komplexen Spannungsraumzeiger *U1*, U*2* unter Berücksichtigung des Vorsteuerwerts *k*1s. Im Schritt S6 steuert die Steuereinrichtung 15 den Multilevelkonverter 4 entsprechend der im Schritt S5 ermittelten Ansteuerung C an. Somit wird im Ergebnis erreicht, dass der Multilevelkonverter 4 entsprechende ausgangsseitige Phasenspannungen bereitstellt.

Dabei sei angemerkt, dass sich ein weiterer, hier nicht gezeigter Schritt dann ergibt, wenn die Primärseite des Ofentransformators 3 als Dreieckschaltung verschaltet ist, der Multilevelkonverter 4 aber Strangspannungen entgegennimmt. In diesem Fall bezieht sich auch der komplexe Flussraumzeiger zunächst auf diese Dreieckschaltung und kann dann mit einer Dreieck-Sterntransformation auf die Sternschaltung bezogen werden. Alternativ können die ausgangsseitigen Phasenspannungen zunächst als verkettete Spannungen ermittelt werden, die erst zu diesem Zeitpunkt auf Strangspannungen umgerechnet werden.

Es ist möglich, dass die Steuereinrichtung 15 die ersten ausgangsseitigen Phasenspannungsanteile *U11*, U12*, U13** und die zweiten ausgangsseitigen Phasenspannungsanteile *U21*, U*22*, *U*23* unabhängig voneinander ermittelt. Es können jedoch auch Abhängigkeiten bestehen.

Im Schritt S3 ist dabei ein erster Regler gebildet. Die Ermittlung des Schrittes S3 erfolgt dabei derart, dass die Summe der Produkte der ersten ausgangsseitigen Phasenspannungsanteile *U11*, U12*, U13** und der ausgangsseitigen Phasenströme *I*1, *I*2, *I*3 gleich einer ausgangsseitigen momentanen Sollleistung *P** ist. Die Ermittlung des Schrittes S3 erfolgt also derart, dass die Beziehung $1.5 Re \left({{U 1}_{¯}}^{∗}{I}_{¯}′\right) = {P}^{∗}$ (7) gilt, wobei mit *I*' der konjugiert komplexe Wert des komplexen ausgangsseitigen Stromraumzeigers *I* bezeichnet ist. Die Sollleistung *P** ist einem der Steuereinrichtung 15 bekannten Sollleistungsverlauf entnommen und nur für den momentanen, aktuellen Zyklus gültig. Nachdem, wie oben bezüglich Fig. 7 erläutert wurde, der komplexe erste ausgangsseitige Phasenspannungsraumzeiger *U*1* zumindest im Wesentlichen in Richtung des Stromraumzeigers *I* zeigt, ist die vorgenommene Zuordnung zweckmäßig. Abweichungen, insbesondere durch die zweite ausgangsseitigen Phasenspannung *U*2* des zweiten Reglers zusätzlich eingebrachte Leistungsanteile, wenn der Flussraumzeiger *Φ* nicht vollständig orthogonal auf dem Stromraumzeiger *I* steht, können durch den zweiten Anteil des Vorsteuerwertd k1s des zweiten Reglers kompensiert werden. Dabei entfällt bei Verwendung obiger Formel der erste Anteil des Vorsteuerwertes k1s. Erfolgt die Ermittlung des Schrittes S3 dagegen mit der einfacheren Beziehung $1.5 \left|{U 1}_{¯}\right| * \left|{I}_{¯}′\right| = {P}^{∗} ,$ (7b) so ist der erste Anteil des Vorsteuerwertes erforderlich, da diese Formel bei von Null verschiedenem Winkel nicht mehr korrekt ist.

Im Schritt S4 wird ein zweiter Regler, der eine Flussregelung tätigt, realisiert. Dabei wird ausgenutzt, dass nur die zweiten ausgangsseitigen Phasenspannungsanteile *U21*,* U22* und U23* einen Einfluss auf den Betrag des komplexen magnetischen Flussraumzeigers *Φ* haben, da U1* senkrecht zum komplexen Flussraumzeiger Φ steht. Der Steuereinrichtung 15 ist in der komplexen Ebene ein Flussgebiet bekannt, innerhalb dessen ein komplexer Flussraumzeiger des Ofentransformators 3 liegen darf. Dieses kann bevorzugt in eine geschlossene Kurve entartet sein. Insbesondere kann der zweite Regler auf einen Sollwert für den Betrag des magnetischen Flussraumzeigers *Φ* regeln. Beträgt die Sättigungsmagnetisierung für die Eisensättigung im Ofentransformator 3 beispielsweise 1,7 Tesla, kann ein niedrigerer Sollwert von 1,4 Tesla verwendet werden.

Die Aktionen des zweiten Reglers können auch eine Änderung der Leistung hervorrufen, da der komplexe Flussraumzeiger *Φ* im Allgemeinen nicht exakt senkrecht auf dem komplexen Stromraumzeiger *I* steht. Die beiden Regler sind also nur teilweise entkoppelt. Um eine vollständige Entkopplung zu erlauben, ermittelt der zweite Regler den Vorsteuerwert *k*1s so, dass durch die Winkelabweichung entstehende Leistungsänderungen exakt wieder kompensiert werden. Somit entsteht am ersten Regler aufgrund der Flussänderung keine Regelabweichung und beide Regler sind vollständig entkoppelt.

Bei der Ermittlung des komplexen Flussraumzeigers *Φ* ist eine Anfangsbedingung *Φ*(0) zunächst unbekannt, insbesondere, da aufgrund des geschlossenen Eisenkerns des Ofentransformators 3 auch von Null verschiedene magnetische Schenkelflusskomponenten vorliegen können, wenn weder Strom noch Spannung vorhanden sind. Fig. 8 zeigt, wie dieses Problem zu Beginn einer neuen Betriebsphase gelöst wird. Dabei wird insbesondere das ohnehin bestehende Zeitfenster genutzt, in dem die Elektroden 1 zunächst noch in das zu schmelzende Material abgesenkt werden müssen.

In einem Schritt S7 wird dabei der Ofentransformator 3 primärseitig mit letztlich beliebigen Phasenspannungen beaufschlagt. In einem Schritt S8 wird mit einer noch beliebigen Anfangsbedingung, beispielsweise *Φ*(0)=0, die Ermittlung des komplexen Flussraumzeigers *Φ* durch Integration begonnen. Gleichzeitig wird in einem Schritt S9 überprüft, ob die Eisensättigung des Ofentransformators 3 erreicht ist. Dies ist dann der Fall, wenn mindestens einer der primärseitigen Phasenströme (entspricht vorliegend einem Anstieg des Betrags des ausgangsseitigen komplexen Stromraumzeigers *I*; in anderen Fällen kann ggf., wie oben dargelegt, noch eine Stern-Dreieck-Transformation nötig sein) ansteigt. Ist dies der Fall, wird in einem Schritt S10 die Anfangsbedingung *Φ*(0) so angepasst, dass die Integration korrekt in dem festgestellten Sättigungswert resultiert. Danach kann die Integration fortgesetzt werden.

Zur Kontrolle der Spannung an sich, insbesondere zu Beginn einer Betriebsphase, kann im vorliegenden Ausführungsbeispiel auch ein Spannungsbegrenzungsmechanismus vorgesehen sein. Hierzu sind der Steuereinrichtung 15 Maximalwerte für die Phasenspannungen bekannt. Überschreitet wenigstens eine Phasenspannung den Maximalwert, übernimmt eine Begrenzungsregelung, die beispielsweise auf die hinsichtlich der Wirkleistung hauptsächlich relevanten ersten ausgangsseitigen Phasenspannungsanteile *U11*, U12*, U13** wirken kann, aber auch die ermittelten insgesamten Phasenspannungen wirken kann. Bevorzugt wird die Flussregelung im zweiten Regler jedoch wirksam gehalten. Die Begrenzungsregelung übernimmt die Steuerung der ersten ausgangsseitigen Phasenspannungsanteile *U11*, U12*, U13** so lange, bis die momentane Wirkleistung wieder die Sollleistung *P** erreicht. Für den Fall, dass die momentane Wirkleistung die Sollleistung *P** überschreitet, wird die Begrenzungsregelung wieder deaktiviert und der erste Regler regelt die Leistung wie beschrieben. Auf diese Weise wird verhindert, dass zu Beginn einer Betriebsphase eine oder mehrere Phasenspannungen den Maximalwert überschreiten und das Risiko besteht, dass der Lichtbogen statt zum zu schmelzenden Metall auf eine andere Komponente der Anlage, beispielsweise den Deckel des Lichtbogenofens 2, überspringt und diesen einschmilzt.

Mittels der Ansteuerung C des Multilevelkonverters 4 wird in der Regel auch der Bezug von eingangsseitigen Phasenströmen *i1, i2, i*3 festgelegt. Die eingangsseitigen Phasenspannungen *u*1, *u2, u3* hingegen sind aufgrund des Betriebes des Versorgungsnetzes 5 vorgegeben. Sie können der Steuereinrichtung 15 beispielsweise aufgrund einer Erfassung mittels einer entsprechenden Messeinrichtung 19 (siehe Fig. 1) bekannt sein.

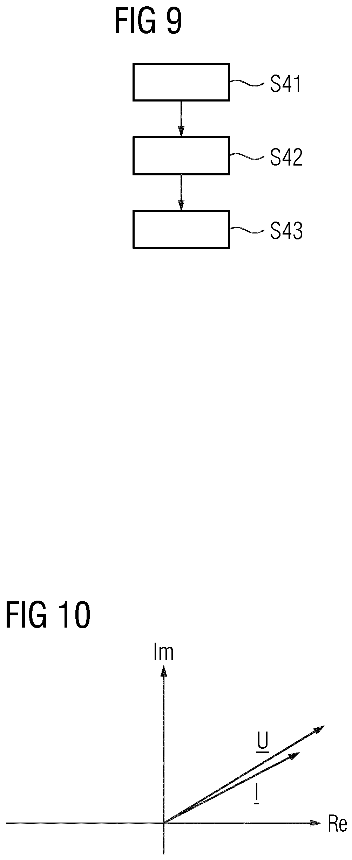

Zur (vollständigen) Ermittlung der Ansteuerung C des Multilevelkonverters 4 ist die Vorgehensweise von Fig. 5 um zusätzliche Schritte S41 bis S43 gemäß Fig. 9 ergänzt. Die Schritte S41 bis S43 werden ebenfalls in jedem Zyklus neu ausgeführt und in jedem Fall vor dem Schritt S5 ausgeführt. In der Regel werden sie nach den Schritten S1 bis S4 ausgeführt.

Im Schritt S41 werden der Steuereinrichtung 15 für die eingangsseitigen Phasen 6 Anteile a1, a2, a3 bekannt, zu denen eine aus dem Versorgungsnetz 5 momentan bezogene Leistung p, nachfolgend als eingangsseitige momentane Leistung *p* bezeichnet, auf die eingangsseitigen Phasen 6 verteilt werden soll. Auch die Anteile a1, a2, a3 sind nur für den aktuellen Zyklus gültig.

Analog zur ausgangsseitigen momentanen Sollleistung *P** ist es möglich, dass der Steuereinrichtung 15 vorab für eine Vielzahl von Zyklen die zeitlichen Verläufe für die Anteile a1, a2, a3 bekannt sind. Auch in diesem Fall ermittelt die Steuereinrichtung 15 jedoch anhand der ihr bekannten zeitlichen Verläufe im Schritt S41 für den jeweiligen Zyklus die aktuellen Werte a1, a2, a3.

Für die eingangsseitige momentane Leistung *p* gilt, dass sie vom Ansatz her gleich der Leistung ist, die vom Multilevelkonverter 4 momentan dem Ofentransformator 3 zugeführt wird. Es müssen lediglich die innerhalb des Multilevelkonverters 4 auftretenden Verluste berücksichtigt werden. Wenn die ausgangsseitige momentane Sollleistung *P** vorgegeben ist, kann die Steuereinrichtung 15 daher die eingangsseitige momentane Leistung *p* im Schritt S42 anhand der ausgangsseitigen momentanen Sollleistung *P** ermitteln. Wenn die ausgangsseitige momentane Sollleistung *P** nicht vorgegeben ist, kann die Steuereinrichtung 15 die eingangsseitige momentane Leistung *p* im Schritt S42 anhand der ermittelten ausgangsseitigen Phasenspannungen und des komplexen ausgangsseitigen Stromraumzeigers / ermitteln. In beiden Fällen ist es ohne weiteres möglich, im Schritt S42 die eingangsseitige momentane Leistung *p* zu ermitteln.

Im Schritt S43 ermittelt die Steuereinrichtung 15 die eingangsseitigen Phasenströme *i1, i2, i3.* Die Ermittlung erfolgt derart, dass die Beziehungen $i 1 ⋅ u 1 = a 1 ⋅ p ,$ (8) $i 2 ⋅ u 2 = a 2 ⋅ p und$ (9) $i 3 ⋅ u 3 = a 3 ⋅ p$ (10) gelten.

Analog zur Vorgehensweise ausgangsseitig des Multilevelkonverters können auch die eingangsseitigen Phasenströme *i1, i2, i3* und die eingangsseitigen Phasenspannungen *u*1, *u*2, *u*3 mittels der Beziehungen ${i}_{¯} = \frac{2}{3} ⋅ \left[i1+i2⋅exp\left(2iπ/3\right)+i3⋅exp\left(-2iπ/3\right)\right]$ (11) und ${u}_{¯} = \frac{2}{3} ⋅ \left[u1+u2⋅exp\left(2iπ/3\right)+u3⋅exp\left(-2iπ/3\right)\right]$ (12) in jeweilige komplexe Raumzeiger *i, u* umgerechnet werden. Vorzugsweise sind die Anteile a1, a2, a3 derart bestimmt, dass der komplexe eingangsseitige Stromraumzeiger *i* entsprechend der Darstellung in Fig. 10 in der komplexen Ebene parallel zu dem komplexen eingangsseitigen Spannungsraumzeiger *u* orientiert ist. Der in Fig. 10 gegebene sehr geringe Winkel zwischen dem komplexen eingangsseitigen Stromraumzeiger *i* und dem komplexen eingangsseitigen Spannungsraumzeiger *u* dient lediglich dazu, den komplexen eingangsseitigen Stromraumzeiger *i* und den komplexen eingangsseitigen Spannungsraumzeiger *u* in Fig. 10 besser voneinander unterscheiden zu können. Der Winkel dient also lediglich der besseren Darstellung. In der Realität ist der Winkel 0°.

Die parallele Orientierung des komplexen eingangsseitigen Stromraumzeigers *i* und des komplexen eingangsseitigen Spannungsraumzeigers *u* ergibt sich insbesondere dann, wenn die Anteile *a*1, *a*2 und a3 Verläufe aufweisen, die jeweils mit dem Quadrat eines sinusförmigen Verlaufs korrespondieren, wobei der jeweilige zeitliche Verlauf phasengleich zum korrespondierenden Spannungsverlauf der jeweiligen eingangsseitigen Phase 6 ist. Dadurch ergibt sich, betrachtet über jeweils ganze oder halbe Perioden, eine Belastung des Versorgungsnetzes 5 ausschließlich mit Wirkleistung. Unter der zusätzlichen Voraussetzung, dass die ausgangsseitige momentane Sollleistung *P** sich in zeitlicher Hinsicht nicht oder nur langsam ändert, ergibt sich zusätzlich auch eine völlig flickerfreie Belastung des Versorgungsnetzes 5. Gegebenenfalls kann auch anhand vorbestimmter Kriterien ein konstanter oder zeitlich variierender Phasenwinkel zwischen dem komplexen eingangsseitigen Stromraumzeiger *i* und dem komplexen eingangsseitigen Spannungsraumzeiger *u* eingestellt werden. Dadurch kann, wieder betrachtet über ganze oder halbe Perioden, gezielt ein definierter Bezug an Blindleistung aus dem Versorgungsnetz 5 eingestellt werden.

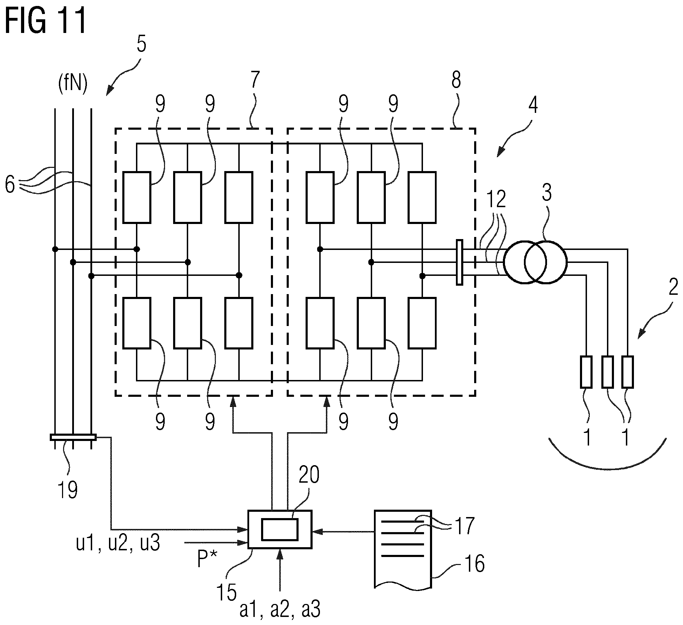

Vorstehend wurde in Verbindung mit den Fig. 1 und 5 eine Vorgehensweise erläutert, bei welcher die Steuereinrichtung 15 die ausgangsseitigen Phasenströme *I*1, *I*2, *I*3 als Messwerte entgegennimmt. Alternativ ist es entsprechend der Darstellung in Fig. 11 möglich, dass die Steuereinrichtung 15 die ausgangsseitigen Phasenströme *I*1, *I*2, *I*3 mittels eines Modells 20 des Lichtbogenofens 2 ermittelt. Entsprechende Modelle sind Fachleuten bekannt. Im Übrigen bleibt die Ausgestaltung von Fig. 1 unverändert und kann auch die Vorgehensweise von Fig. 5 unverändert beibehalten werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Elektroden
- 2: Lichtbogenofen
- 3: Ofentransformator
- 4: Multilevelkonverter
- 5: Versorgungsnetz
- 6: eingangsseitige Phasen
- 7: Gleichrichter
- 8: Wechselrichter
- 9: Arme
- 10: Submodule
- 11: Drosseln
- 12: ausgangsseitige Phasen
- 13: Speicherkondensatoren
- 14: Halbleiterschalter
- 15: Steuereinrichtung
- 16: Steuerprogramm
- 17: Maschinencode
- 18, 19: Messeinrichtungen
- 20: Modell des Lichtbogenofens
- a1, a2, a3: Anteile
- C: Ansteuerung
- fN: Netzfrequenz
- *I, i*: komplexe Stromraumzeiger
- *I'*: konjugiert komplexer Stromraumzeiger
- *I*1, *I*2, *I*3: ausgangsseitige Phasenströme
- *i1, i2, i3*: eingangsseitige Phasenströme
- *P**: ausgangsseitige momentane Sollleistung
- S1-S10, S41-S43: Schritte
- TN: Periodenzeit
- TZ: Zykluszeit
- *U1*, U2*, u*: komplexe Spannungsraumzeiger
- *U11*, U12*, U13**: erste ausgangsseitige Phasenspannungsanteile
- *U21*, U*22*, *U*23*: zweite ausgangsseitige Phasenspannungsanteile
- *u1, u2, u3*: eingangsseitige Phasenspannungen
- *Φ*1, *Φ*2, *Φ*3: Schenkelflusskomponenten
- *Φ*: komplexer Flussraumzeiger

## Patentansprüche

1. Steuerverfahren für einen Multilevelkonverter (4), der Elektroden (1) eines Drehstrom-Lichtbogenofens (2) über einen Ofentransformator (3) mit elektrischer Energie versorgt, mit folgenden, mit einer Zykluszeit (TZ) immer wieder ausgeführten Schritten:
- eine Steuereinrichtung (15) des Multilevelkonverters (4) ermittelt für den jeweils aktuellen Zeitpunkt erste ausgangsseitige Phasenspannungsanteile *(U11*, U12*, U13*),* so dass ein durch die ersten ausgangsseitigen Phasenspannungsanteile *(U11*, U12*, U13*)* bestimmter komplexer erster ausgangsseitiger Spannungsraumzeiger (*U*1*) einer in der komplexen Ebene senkrecht zu einem komplexen Flussraumzeiger (*Φ*), der aus magnetischen Schenkelflusskomponenten (*Φ*1, *Φ*2, *Φ*3) des Ofentransformators (3) gebildet ist, orientiert ist,
- die Steuereinrichtung (15) ermittelt zweite ausgangsseitige Phasenspannungsanteile *(U21*, U*22*, *U*23*), so dass ein durch die zweiten ausgangsseitigen Phasenspannungsanteile *(U21*, U*22*, *U*23*) bestimmter komplexer zweiter ausgangsseitiger Spannungsraumzeiger (*U*2*) in der komplexen Ebene orthogonal zu dem komplexen ersten ausgangsseitigen Spannungsraumzeiger (*U*1*) orientiert ist,
- die Steuereinrichtung (15) steuert den Multilevelkonverter (4) derart an, dass der Multilevelkonverter (4) mit den Summen der ersten und zweiten ausgangsseitigen Phasenspannungsanteile *(U11*, U12*, U13*, U21*, U*22*, *U*23*) korrespondierende ausgangsseitige Phasenspannungen bereitstellt.

2. Steuerverfahren nach Anspruch 1, **dadurch gekennzeichnet, dass** die Steuereinrichtung (15) den komplexen Flussraumzeiger (*Φ*) durch Integration aus den zuletzt zur Steuerung verwendeten ausgangsseitigen Phasenspannungen ermittelt.

3. Steuerverfahren nach Anspruch 2, **dadurch gekennzeichnet, dass** zur Ermittlung eines Startwerts des magnetischen Flussraumzeigers (*Φ*) der Ofentransformator (3) im Leerlauf bis zur Sättigung betrieben wird und die Integration auf den bei Eintritt der Sättigung ermittelten Sättigungswert korrigiert wird.

4. Steuerverfahren nach einem der vorangehenden Ansprüche, **dadurch gekennzeichnet, dass** als die magnetischen Schenkelflusskomponenten (*Φ*1, *Φ*2, *Φ*3) die primärseitigen magnetischen Schenkelflüsse des Ofentransformators (3) verwendet werden.

5. Steuerverfahren nach einem der vorangehenden Ansprüche, **dadurch gekennzeichnet, dass** ferner folgende mit der Zykluszeit (TZ) immer wieder ausgeführte Schritte verwendet werden:
- der Steuereinrichtung (15) werden ausgangsseitig des Multilevelkonverters (4) fließende ausgangsseitige Phasenströme (*I*1, *I*2, 13) bekannt,
- die Steuereinrichtung (15) bestimmt die ersten ausgangsseitigen Phasenspannungsanteile *(U11*, U12*, U13*)* derart, dass die Summe der Produkte der ersten ausgangsseitigen Phasenspannungsanteile *(U11*, U12*, U13*)* und der ausgangsseitigen Phasenströme (*I*1, *I*2, *I*3) gleich einer der Steuereinrichtung (15) bekannten ausgangsseitigen momentanen Sollleistung (*P**) ist.

6. Steuerverfahren nach Anspruch 5, **dadurch gekennzeichnet, dass** die Steuereinrichtung (15) die ausgangsseitigen Phasenströme (*I*1, *I*2, *I*3) als Messwerte entgegennimmt oder dass die Steuereinrichtung (15) die ausgangsseitigen Phasenströme (*I*1, *I*2, *I*3) mittels eines Modells (20) des Lichtbogenofens (2) ermittelt.

7. Steuerverfahren nach Anspruch 5 oder 6, **dadurch gekennzeichnet, dass** der Steuereinrichtung (15) in der komplexen Ebene ein Flussgebiet bekannt ist, innerhalb dessen der komplexe Flussraumzeiger (*Φ*) des Ofentransformators (3) liegen darf, und die Steuereinrichtung (15) die zweiten ausgangsseitigen Phasenspannungsanteile *(U21*, U*22*, *U*23*) unter Berücksichtigung des Abstands des Flussraumzeigers (*Φ*) von den Grenzen des Flussgebietes ermittelt.

8. Steuerverfahren nach Anspruch 7, **dadurch gekennzeichnet, dass** die Steuereinrichtung (15) zusätzlich zu den zweiten ausgangsseitigen Phasenspannungsanteilen *(U21*, U*22*, *U*23*) wenigstens einen Vorsteuerwert (k1s) für die ersten ausgangsseitigen Phasenspannungsanteile *(U11*, U12*, U13*),* die eine Abweichung einer Parallelität des komplexen ersten ausgangsseitigen Spannungsraumzeigers (*U*1*) zu dem komplexen Stromraumzeiger (*I*) der ausgangsseitigen Phasenströme (*I*1, *I*2, *I*3) hinsichtlich der Regelung auf die Sollleistung (*P**) kompensiert, ermittelt.

9. Steuerverfahren nach einem der vorangehenden Ansprüche, **dadurch gekennzeichnet,**
- **dass** der Steuereinrichtung (15) Maximalwerte für die ausgangsseitigen Phasenspannungen bekannt sind und die Steuereinrichtung (15) die ausgangsseitigen Phasenspannungen bei Überschreitung auf die Maximalwerte oder die ersten ausgangsseitigen Phasenspannungsanteile *(U11*, U12*, U13*)* unter Berücksichtigung der Maximalwerte begrenzt und/oder
- **dass** der Steuereinrichtung (15) in der komplexen Ebene ein Spannungsgebiet bekannt ist, innerhalb dessen ein durch die ausgangsseitigen Phasenspannungen bestimmter komplexer ausgangsseitiger Gesamtspannungsraumzeiger liegen darf, und die Steuereinrichtung (15) die ausgangsseitigen Phasenspannungen oder die ersten ausgangsseitigen Phasenspannungsanteile *(U11*, U12*, U13*)* bei außerhalb des Spannungsgebiets liegendem Gesamtspannungsraumzeiger derart begrenzt, dass er an einer Grenze des Spannungsgebiets liegt.

10. Steuerverfahren nach einem der vorangehenden Ansprüche, **dadurch gekennzeichnet, dass** der Multilevelkonverter (4) aufgrund einer entsprechenden Ansteuerung durch die Steuereinrichtung (15) aus eingangsseitigen Phasen (6) eines Versorgungsnetzes (5) eingangsseitige Phasenströme *(i1, i*2, *i3)* bezieht und dass die Steuereinrichtung (15) die Ansteuerung des Multilevelkonverters (4) mit der Zykluszeit (TZ) immer wieder derart ermittelt, dass ein durch die eingangsseitigen Phasenströme *(i1, i2, i3)* bestimmter komplexer eingangsseitiger Stromraumzeiger (*i*) in der komplexen Ebene unter einem vorbestimmten Phasenwinkel relativ zu einem durch die eingangsseitigen Phasenspannungen *(u1, u2, u3)* der eingangsseitigen Phasen (6) des Versorgungsnetzes (5) bestimmten komplexen eingangsseitigen Spannungsraumzeiger (u) orientiert ist, insbesondere parallel zu dem komplexen eingangsseitigen Spannungsraumzeiger (u) orientiert ist.

11. Steuerverfahren nach einem der vorangehenden Ansprüche, **dadurch gekennzeichnet, dass** der Multilevelkonverter (4) aufgrund einer entsprechenden Ansteuerung durch die Steuereinrichtung (15) aus eingangsseitigen Phasen (6) eines Versorgungsnetzes (5) eingangsseitige Phasenströme *(i1, i*2, *i*3) bezieht und dass die Steuereinrichtung (15) mit der Zykluszeit (TZ) immer wieder die Ansteuerung des Multilevelkonverters (4) derart ermittelt, dass der Multilevelkonverter (4) aus den eingangsseitigen Phasen (6) eingangsseitige momentane Leistungen entsprechend für den jeweiligen Zyklus gültiger Anteile (a1, a2, a3) für die eingangsseitigen Phasen (6) bezieht.

12. Steuerverfahren nach einem der vorangehenden Ansprüche, **dadurch gekennzeichnet, dass** der Multilevelkonverter (4) als Zwischenkreisumrichter ausgebildet ist, der zu einem Versorgungsnetz (5) hin einen eingangsseitigen Gleichrichter (7) und zum Ofentransformator (3) hin einen ausgangsseitigen Wechselrichter (8) aufweist, die über einen Gleichspannungskreis miteinander verbunden sind.

13. Steuerprogramm für eine Steuereinrichtung (15) zum Steuern eines Multilevelkonverters (4), der Elektroden (1) eines Drehstrom-Lichtbogenofens (2) über einen Ofentransformator (3) mit elektrischer Energie versorgt, wobei das Steuerprogramm Maschinencode (17) umfasst, der von der Steuereinrichtung (15) unmittelbar abarbeitbar ist, wobei die Abarbeitung des Maschinencodes (17) durch die Steuereinrichtung (15) bewirkt, dass die Steuereinrichtung (15) ein Steuerverfahren nach einem der vorangehenden Ansprüche ausführt.

14. Steuereinrichtung zum Steuern eines Multilevelkonverters (4), der Elektroden (1) eines Drehstrom-Lichtbogenofens (2) über einen Ofentransformator (3) mit elektrischer Energie versorgt, wobei die Steuereinrichtung (15) mit einem Steuerprogramm (16) nach Anspruch 13 programmiert ist, so dass die Steuereinrichtung im Betrieb ein Steuerverfahren nach einem der Ansprüche 1 bis 12 ausführt.

15. Multilevelkonverter (4), der Elektroden (1) eines Drehstrom-Lichtbogenofens (2) über einen Ofentransformator (3) mit elektrischer Energie versorgt, wobei der Multilevelkonverter (4) von einer Steuereinrichtung (15) nach Anspruch 14 gesteuert wird.
